# EUROPEAN PATENT APPLICATION

(11) **EP 3 093 951 A1**
(43) Date of publication of application: **16.11.2016**
(21) Application number: 14877716.2
(22) Date of filing: 25.12.2014
(51) Int. Cl.: H02J 13/00, H02J 1/00

(54) **POWER CONTROL DEVICE AND POWER CONTROL METHOD**

(30) Priority: 08.01.2014 JP 2014001731
(71) Applicant: Sony Corporation, Tokyo 108-0075 (JP)
(72) Inventor: WERTH, Annette, Tokyo 141-0022 (JP); TAJIMA, Shigeru, Tokyo 141-0022 (JP); ISHIBASHI, Yoshihito, Tokyo 141-0022 (JP); MORITA, Tadashi, Tokyo 141-0022 (JP)
(74) Representative: Witte, Weller & Partner Patentanwälte mbB
(86) International application number: PCT/JP2014/084290
(87) International publication number: WO 2015/105006

(57) **Abstract**

[Object] To propose a power control device enabling a system that interchanges DC power to be realized with a simple configuration, and also enabling scalable construction of the system.

[Solution] There is provided a power control device including a reception unit configured to receive a power supply demand from a cell connected to a first bus line that transmits direct-current (DC) power, a transmission unit configured to transmit, in response to the power supply demand from the cell connected to the first bus line that was received by the reception unit, the power supply demand to a cell connected to a second bus line that transmits DC power, and a power control unit configured to control, by a reply to the power supply demand transmitted to the cell connected to the second bus line, power conversion between the first bus line and the second bus line on a basis of information relating to respective voltages of the first bus line and the second bus line.

## Description

### Technical Field

The present disclosure relates to a power control device and a power control method.

### Background Art

Generally, interchanging alternating-current (AC) electric power generated by power plants requires a mechanism of phase synchronization and harmonic suppression. Additionally, unless AC power is first converted to direct-current (DC) power and then converted back to AC power, connecting to power grids of independent phase is difficult. Consequently, these constraints become factors that increase system costs. In addition, since renewable energy produces DC power, and since batteries also store DC power, AC power is unsuited to power systems equipped with renewable energy or batteries. Accordingly, to use electric power efficiently, there is proposed technology related to a system of interchanging electric power by supplying electric power between hubs, such as within a region, between businesses, and between homes (see Patent Literature 1 and Non-Patent Literature 1, for example).

For example, Patent Literature 1 and Non-Patent Literature 1 propose technologies related to a system that exchanges DC power based on renewable energy sources such as wind power and solar power, or interchanges DC power between hubs.

### Citation List

Patent Literature

Patent Literature 1: U.S. No. 2012/0119586

### Non-Patent Literature

Non-Patent Literature 1: R. Abe, H. Taoka, "Digital Grid: Communicative Electrical Grids of the Future", IEEE TRANSACTIONS ON SMART GRID, VOL. 2, NO. 2, pp. 399-410, JUNE 2011.

### Summary of Invention

### Technical Problem

With existing technologies that supply DC power between grids, to supply high-capacity, high-voltage electric power, a one-to-one connection is often demanded, and thus interconnection becomes more complicated as the number of hubs increases. Additionally, with existing technologies that supply DC power between grids, the voltage value is predetermined, and changing an already-determining voltage value is difficult. Furthermore, once the system has been constructed, changing the configuration later is also difficult, and the construction of a scalable system is unfeasible.

Accordingly, the present disclosure proposes a new and improved power control device and power control method enabling a system that interchanges DC power to be realized with a simple configuration, and also enabling scalable construction of the system.

### Solution to Problem

According to the present disclosure, there is provided a power control device including: a reception unit configured to receive a power supply demand from a cell connected to a first bus line that transmits direct-current (DC) power; a transmission unit configured to transmit, in response to the power supply demand from the cell connected to the first bus line that was received by the reception unit, the power supply demand to a cell connected to a second bus line that transmits DC power; and a power control unit configured to control, by a reply to the power supply demand transmitted to the cell connected to the second bus line, power conversion between the first bus line and the second bus line on a basis of information relating to respective voltages of the first bus line and the second bus line.

According to the present disclosure, there is provided a power control method including: receiving a power supply demand from a cell connected to a first bus line that transmits direct-current (DC) power; transmitting, in response to the received power supply demand from the cell connected to the first bus line, the power supply demand to a cell connected to a second bus line that transmits DC power; and controlling, by a reply to the power supply demand transmitted to the cell connected to the second bus line, power conversion between the first bus line and the second bus line on a basis of information relating to respective voltages of the first bus line and the second bus line.

### Advantageous Effects of Invention

According to the present disclosure as described above, it is possible to provide a new and improved power control device and power control method enabling a system that interchanges DC power to be realized with a simple configuration, and also enabling scalable construction of the system.

Note that the effects described above are not necessarily limited, and along with or instead of the effects, any effect that is desired to be introduced in the present specification or other effects that can be expected from the present specification may be exhibited.

### Brief Description of Drawings

[FIG. 1] FIG. 1 is an explanatory diagram illustrating an overview of a power supply system according to an embodiment of the present disclosure.
[FIG. 2] FIG. 2 is an explanatory diagram illustrating an example configuration of a power supply system 1 according to an embodiment of the present disclosure.
[FIG. 3] FIG. 3 is an explanatory diagram illustrating another example configuration of a power supply system 1 according to an embodiment of the present disclosure.
[FIG. 4] FIG. 4 is an explanatory diagram illustrating another example configuration of a power supply system 1 according to an embodiment of the present disclosure.
[FIG. 5] FIG. 5 is an explanatory diagram illustrating another example configuration of a power supply system 1 according to an embodiment of the present disclosure.
[FIG. 6] FIG. 6 is an explanatory diagram illustrating an example configuration of a control unit.
[FIG. 7] FIG. 7 is a sequence diagram illustrating example operation of a power supply system 1 according to an embodiment of the present disclosure.
[FIG. 8] FIG. 8 is a sequence diagram illustrating example operation of a power supply system 1 according to an embodiment of the present disclosure.

### Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

Hereinafter, the description will proceed in the following order.

### <1. Embodiment of present disclosure>

[1.1. Overview of system]
[1.2. Example configuration of system]
[1.3. Example operation of system]

### <2. Conclusion>

### <1. Embodiment of present disclosure>

### 1.1. Overview of system

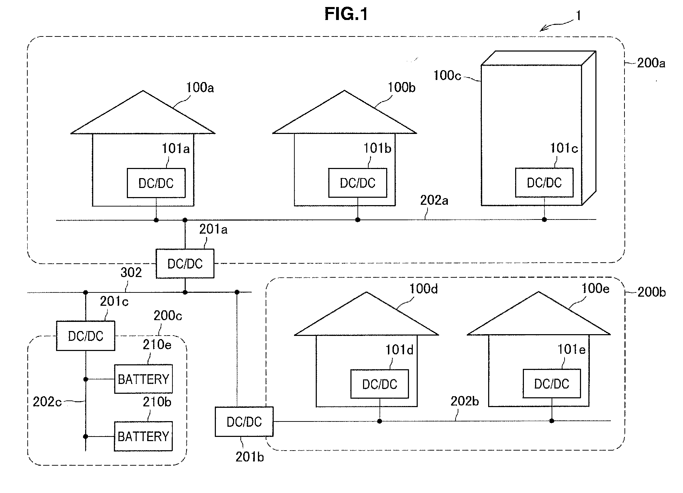

First, an overview of a power supply system that interchanges AC power according to an embodiment of the present disclosure will be described. FIG. 1 is an explanatory diagram illustrating an overview of a power supply system according to an embodiment of the present disclosure. Hereinafter, FIG. 1 will be used to describe an overview of a power supply system according to an embodiment of the present disclosure.

The power supply system 1 illustrated in FIG. 1 is a power supply system that interchanges electric power by having respective hubs, such as regions, businesses, or homes, supply DC power to another hub, and receive a supply of DC power from another hub.

In the present embodiment, a closed group that generates, stores, and consumes DC power is designated a "cell". FIG. 1 illustrates cells 100a, 100b, 100c, 100d, and 100e. In FIG. 1, the cells 100a, 100b, 100d, and 100e are illustrated as general households, while the cell 100c is illustrated as a building.

The cells 100a, 100b, and 100c are interconnected by a bus line 202a, while the cells 100d and 100e are interconnected by a bus line 202b. The bus lines 202a and 202b both carry direct current. The cells 100a, 100b, 100c, 100d, and 100e are respectively provided with DC/DC converters 101a, 101b, 101c, 101d, and 101e that convert a DC voltage to another voltage. The DC/DC converters 101a, 101b, and 101c convert between the voltage of an internal bus line inside the cells 100a, 100b, and 100c, respectively, and the voltage of the bus line 202a. Similarly, the DC/DC converters 101d, and 101e convert between the voltage of an internal bus line inside the cells 100e, and 100e, respectively, and the voltage of the bus line 202b.

An example configuration of the inside of each cell will be discussed in detail later, but the cells 100a, 100b, 100c, 100d, and 100e are configured to be able to receive a supply of power from an existing power grid (electric utility) or renewable energy such as wind or solar power, and to supply power to a battery and electronic devices provided internally inside each cell, for example.

In FIG. 1, a group made up of the cells 100a, 100b, and 100c is illustrated as a cell 200a in a higher layer above the constituent cells. Similarly, in FIG. 1, a group made up of the cells 100d and 100e is illustrated as a cell 200b in a higher layer above the constituent cells. Furthermore, FIG. 1 illustrates another cell 200c. In the present embodiment, the cell 200c is provided with batteries 210a and 210b that store electric power.

The cells 100a, 100b, and 100c are cells existing within a range from several hundred meters to several kilometers, for example. The power supply system 1 according to an embodiment of the present disclosure may group cells within such a range into a cell 200a, as illustrated in FIG. 1. Similarly, the cells 100d and 100e are also cells existing within a range from several hundred meters to several kilometers, and the power supply system 1 according to an embodiment of the present disclosure may group cells within such a range into a cell 200b, as illustrated in FIG. 1. The distance between the cell 200a and the cell 200b may be longer than the distance between the respective cells included in the cell 200a. For example, the cell 200a and the cell 200b may be separated by approximately several kilometers or more.

Additionally, the cells 200a, 200b, and 200c are interconnected by a bus line 302. The bus line 302 carries direct current. Also, the cells 200a, 200b, and 200c are respectively provided with DC/DC converters 201a, 201b, and 201c that convert a DC voltage to another voltage. The DC/DC converters 201a, 201b, and 201c convert between the voltage of the internal bus lines 202a, 202b, and 202c inside the cells 200a, 200b, and 200c, respectively, and the voltage of the bus line 302.

In the power supply system 1 according to an embodiment of the present disclosure, each of the cells 100a, 100b, 100c, 100d, and 100e controls power supply to its internal bus line independently. Additionally, when electric power threatens to run out inside each cell, each cell requests a supply of electric power from another cell connected to the same bus line. There are various conceivable factors by which the electric power may threaten to run out inside a cell, such as when power supply from an electric utility is interrupted, or when the weather changes suddenly and power from solar power generation is no longer supplied as expected, for example.

For example, in the configuration illustrated in FIG. 1, if electric power threatens to run out inside the cell 100a, the cell 100a requests a supply of electric power from the other cells 100b and 100c connected to the bus line 202a. When requesting a supply of electric power, the cell 100a requests a supply of electric power from the other cells 100b and 100c over a communication link not illustrated in FIG. 1. Furthermore, the cell 100a also requests a supply of electric power from the DC/DC converter 201 a in addition to the cells 100b and 100c.

The cells 100b and 100c receive the request for a supply of electric power from the cell 100a, determine whether or not a supply of electric power is available, and reply to the cell 100a with the availability or unavailability of a supply of electric power. If a cell able to supply electric power exists, the cell 100a selects a cell from which to receive a supply of electric power, and responds to indicate acceptance of the proposal for a supply of electric power from that cell. This response is also transmitted to the other cells.

In addition, the DC/DC converter 201a that received a request for a supply of electric power from the cell 100a forwards the request for a supply of electric power from the cell 100a to the other DC/DC converters belonging to the same layer, namely the DC/DC converters 201b and 201c connected to the same bus line 302. The DC/DC converters 201b and 201c forward the request for a supply of electric power from the cell 100a to the cells included in their own cells 200b and 200c, such as the cells 100d and 100e in the case of the cell 200b, for example. The cells 100d and 100e receive the request for a supply of electric power from the cell 100a, determine whether or not a supply of electric power is available, and reply to the DC/DC converter 201b with the availability or unavailability of a supply of electric power. The DC/DC converter 201b forwards the replies from the cells 100d and 100e to the DC/DC converter 201a, and the DC/DC converter 201a forwards the replies from the cells 100d and 100e to the cell 100a.

For example, if the cell 100b is unable to supply electric power, but the cell 100c is able to supply electric power, the cell 100b replies with an indication that a supply of electric power is unavailable, while the cell 100c replies with an indication that a supply of electric power is available. The basis of determining whether or not a supply of electric power is available is not limited to a specific basis, and may be determined by accounting for various factors, such as the status of power usage inside each cell, remaining battery charge levels, and the power generation status of renewable energy sources, for example.

The cell 100a receiving the replies from the cells 100b and 100c is able to ascertain that a supply of electric power is available from the cell 100c. In the case of accepting the proposal for a supply of electric power from the cell 100c, the cell 100a responds to the cell 100b, the cell 100c, and the DC/DC converter 201a with an indication of accepting the supply of electric power from the cell 100c. Based on the reply from the cell 100a, the cell 100c supplies electric power to the cell 100a over the bus line 202a.

In the power supply system 1 according to an embodiment of the present disclosure, the cell 200a including the cells 100a, 100b, and 100c is joined to another cell 200b including the multiple cells 100d and 100e by a bus line 302a, thereby enabling the transmission of DC power between cells over a long distance (for example, approximately several kilometers or more).

The power supply system 1 according to an embodiment of the present disclosure, by having a hierarchical structure as illustrated in FIG. 1, enables the supply of electric power within the same layer, and the supply of electric power across layers. In addition, the power supply system 1 according to an embodiment of the present disclosure may be realized with a simple configuration, and also enables scalable construction of the system.

The above thus describes an overview of the power supply system 1 according to an embodiment of the present disclosure. Next, a specific example of the configuration of the power supply system 1 according to an embodiment of the present disclosure will be described.

### [1.2. Example configuration of system]

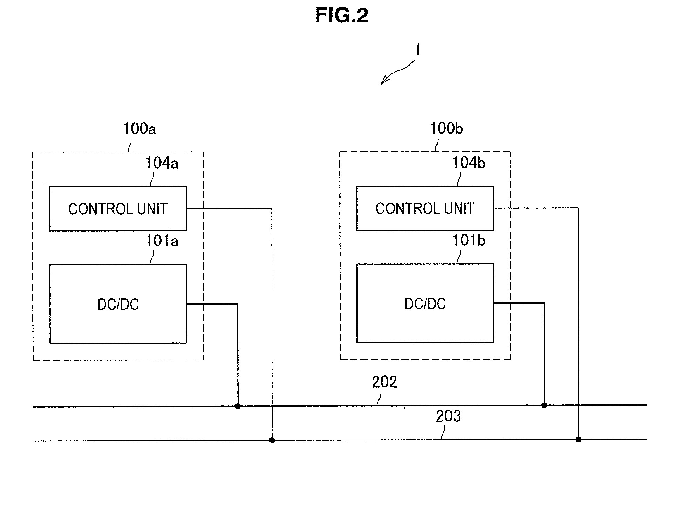

First, a specific example of the configuration of the power supply system 1 according to an embodiment of the present disclosure will be described with a simple example configuration. FIG. 2 is an explanatory diagram illustrating an example configuration of the power supply system 1 according to an embodiment of the present disclosure. Hereinafter, FIG. 2 will be used to describe an example of a basic configuration of the power supply system 1 according to an embodiment of the present disclosure.

The power supply system 1 illustrated in FIG. 2 has a configuration in which two cells 100a and 100b are connected to a bus line 202 and a communication link 203. The cell 100a includes a DC/DC converter 101a and a control unit 104a, while the cell 100b includes a DC/DC converter 101b and a control unit 104b.

The DC/DC converter 101a converts between the voltage of an internal bus line inside the cell 100a, and the voltage of the bus line 202. Similarly, the DC/DC converter 101b converts between the voltage of an internal bus line inside the cell 100b, and the voltage of the bus line 202.

The control unit 104a performs various controls for the cell 100a. For example, when electric power threatens to run out inside the cell 100a, the control unit 104a transmits, over the communication link 203, a power supply demand for requesting a supply of electric power to the other cell 100b connected to the bus line 202. The control unit 104a also controls the voltage conversion by the DC/DC converter 101a. In other words, the control unit 104a stores information about the voltage value of the bus line inside the cell 100a (not illustrated in FIG. 2) and the voltage value of the bus line 202 outside the cell 100a, and controls the DC/DC converter 101a so that appropriate conversion is performed. The control unit 104b likewise performs similar controls as the control unit 104a.

In the power supply system 1 according to an embodiment of the present disclosure, by treating the configuration illustrated in FIG. 2 as a basic foundation and increasing the number of cells within the same layer or adding additional layers, scalable construction of the system becomes possible.

The above thus uses FIG. 2 to describe an example of a basic configuration of the power supply system 1 according to an embodiment of the present disclosure. Next, another example configuration of the power supply system 1 according to an embodiment of the present disclosure will be described.

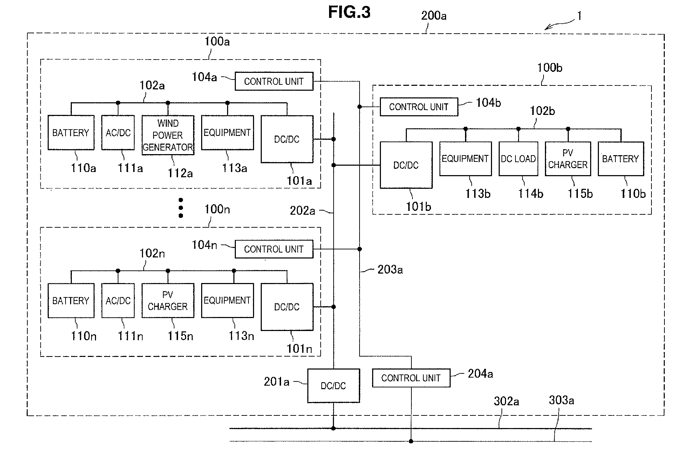

FIG. 3 is an explanatory diagram illustrating another example configuration of a power supply system 1 according to an embodiment of the present disclosure. FIG. 3 illustrates, in addition to the example of a basic configuration of the power supply system 1 according to an embodiment of the present disclosure illustrated in FIG. 2, a configuration for connecting to a higher layer. Hereinafter, FIG. 3 will be used to describe another example configuration of the power supply system 1 according to an embodiment of the present disclosure.

The power supply system 1 illustrated in FIG. 3 has a configuration in which N cells 100a, 100b, ..., 100n are connected to a bus line 202a and a communication link 203a. Additionally, in the power supply system 1 illustrated in FIG. 3, a group made up of the N cells 100a, 100b, ..., 100n is illustrated as a cell 200a in a higher layer above the constituent cells.

The cell 100a includes a DC/DC converter 101a, a control unit 104a, a battery 110a, an AC/DC converter 111a, a wind power generator 112a, and equipment 113a. The DC/DC converter 101a, the battery 110a, the AC/DC converter 111a, the wind power generator 112a, and the equipment 113a are all connected to a bus line 102a.

The functions of the DC/DC converter 101a and the control unit 104a are the same as discussed in the description of FIG. 2. The battery 110a is a storage battery capable of charging and discharging, and may be made up of a lithium-ion battery or some other secondary battery, for example. The AC/DC converter 111a converts AC power supplied from an electric utility (not illustrated) to DC power, and supplies DC power to the bus line 102a. The wind power generator 112a is a power generator that converts wind power into electric power, and includes a windmill and a motor, for example. The wind power generator 112a supplies generated electric power (DC power) to the bus line 102a. The equipment 113a is a variety of electronic devices that operate by receiving a supply of DC power from the bus line 102a.

Note that although not explicitly illustrated in FIG. 3, the control unit 104a may also be configured to operate by receiving a supply of electric power from the bus line 102a.

The cell 100b includes a DC/DC converter 101b, a control unit 104b, a battery 110b, equipment 113b, a DC load 114b, and a PV charger 115b. The DC/DC converter 101b, the battery 110b, the equipment 113b, the DC load 114b, and the PV charger 115b are all connected to a bus line 102b.

The functions of the DC/DC converter 101b and the control unit 104b are the same as discussed in the description of FIG. 2. Also, the functions of the battery 110b and the equipment 113b are the same as discussed in the description of the functions of the battery 110a and the equipment 113a above. The DC load 114b is a variety of loads that receive a supply of DC power from the bus line 102b, and consume the power. The PV charger 115b is a charger that charges devices such as the battery 110b with electric power (DC power) generated by photovoltaic (PV) power generation.

Note that although not explicitly illustrated in FIG. 3, the control unit 104b may also be configured to operate by receiving a supply of electric power from the bus line 102b.

The cell 100n includes a DC/DC converter 101n, a control unit 104n, a battery 110n, an AC/DC converter 111n, equipment 113n, and a PV charger 115n. The DC/DC converter 101n, the battery 110n, the AC/DC converter 111n, the equipment 113n, and the PV charger 115n are all connected to a bus line 102n.

The functions of the DC/DC converter 101n and the control unit 104n are the same as discussed in the description of FIG. 2. Also, the functions of the battery 110n, the AC/DC converter 111n, and the equipment 113n are the same as discussed in the description of the functions of the battery 110a, the AC/DC converter 111a, and the equipment 113a above. Also, the function of the PV charger 115n is the same as discussed in the description of the function of the PV charger 115b above.

Note that although not explicitly illustrated in FIG. 3, the control unit 104n may also be configured to operate by receiving a supply of electric power from the bus line 102n.

In the power supply system 1 illustrated in FIG. 3, when electric power threatens to run out inside each of the cells 100a, 100b, ..., 100n, a power supply demand is transmitted over the communication link 203a to the other cells connected to the bus line 202a. Also, when a group made up of the N cells 100a, 100b, ..., 100n is configured as a cell 200a in a higher layer above the constituent cells as in FIG. 3, the cell 200a includes a DC/DC converter 201a and a control unit 204a. The DC/DC converter 201 a is connected to the bus line 202a, while the control unit 204a is connected to the communication link 203a.

When the control unit 204a receives a power supply demand from the control units 104a, 104b, ..., 104n included in each of the cells 100a, 100b, ..., 100n, the control unit 204a forwards the received power supply demand to other cells in the same layer as the cell 200a, or in other words, other cells connected to a bus line 302a.

The control unit 204a also controls the voltage conversion by the DC/DC converter 201a. In other words, the control unit 204a stores information about the voltage value of the bus line 202a inside the cell 200a and the voltage value of the bus line 302a outside the cell 200a, and controls the DC/DC converter 201a so that appropriate conversion of electric power is performed.

By configuring the power supply system 1 like in FIG. 3, when electric power threatens to run out inside each of the cells 100a, 100b, ..., 100n, and a power supply demand is output to the other cells, the power supply demand may also be forwarded to a higher layer. By forwarding the power supply demand to a higher layer, even if all of the cells 100a, 100b, ..., 100n included in the cell 200a of FIG. 3 are unable to fulfill a power supply demand from a cell 100a, 100b, ..., 100n included in the same cell 200a, there is still a possibility of receiving, over the bus line 302a, a supply of electric power from another cell not included in the cell 200a.

The control unit 104a may also transmit, as a power supply demand, information including the amount of electric power demanded, a time slot during which the supply of electric power is demanded, information about the desired cost, and a log of previous power reception, for example. Additionally, a response to a power supply demand may include information such as the amount of electric power that can be supplied, the time when electric power can be transmitted, information about the cost of the electric power, and a log of previous supply to the device demanding a power supply, for example.

In the present embodiment, the rated voltages of the bus lines are taken to increase in order from lower layer to higher layer. For example, suppose that the rated voltage of the bus line 102a is 80 V, the rated voltage of the bus line 102b is 120 V, and the rated voltage of the bus line 102n is 140 V. In this case, the rated voltage of the bus line 202a may bed set to 200 V, for example, and the rated voltage of the bus line 302a may be set to 300 V, for example. Obviously, the above values of the rated voltages are merely one example.

Obviously, the configuration inside each cell is not limited to such an example. Additionally, each cell illustrated in FIG. 3 may also have a configuration for receiving a supply of electric power from an existing power grid.

The above thus uses FIG. 3 to describe an example of a basic configuration of the power supply system 1 according to an embodiment of the present disclosure. Next, another example configuration of the power supply system 1 according to an embodiment of the present disclosure will be described.

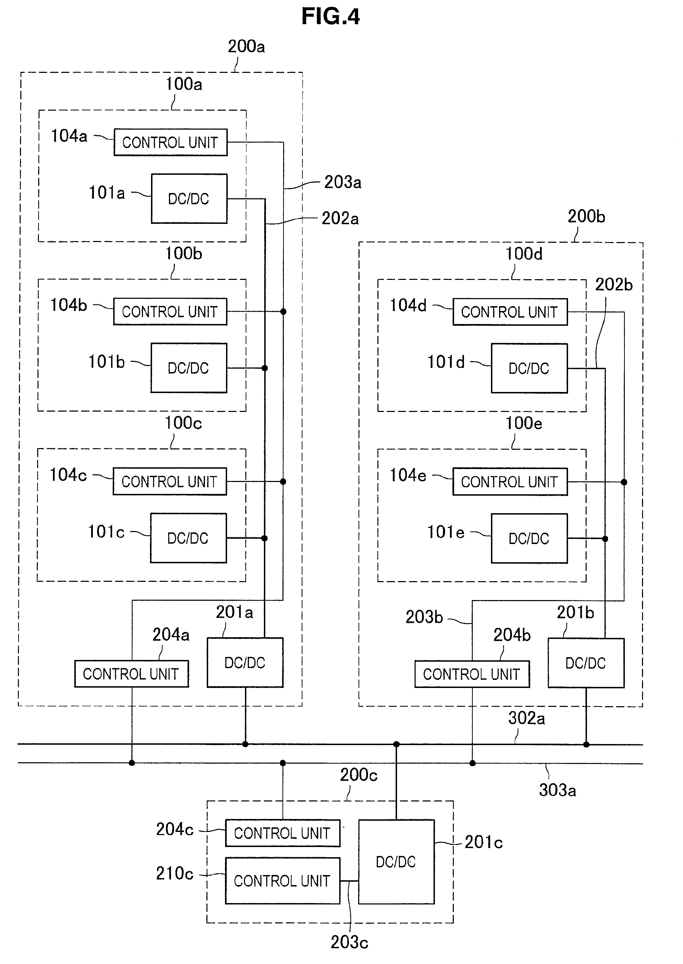

FIG. 4 is an explanatory diagram illustrating another example configuration of the power supply system 1 according to an embodiment of the present disclosure. FIG. 4 illustrates, in addition to the example configuration of the power supply system 1 according to an embodiment of the present disclosure illustrated in FIG. 3, a configuration including other cells connected to the bus line 302a. Hereinafter, FIG. 4 will be used to describe another example configuration of the power supply system 1 according to an embodiment of the present disclosure.

In the power supply system 1 illustrated in FIG. 4, cells 200a, 200b, and 200c are connected to a bus line 302a and a communication link 303a. As illustrated in FIG. 4, the cell 200a includes a DC/DC converter 201a and a control unit 204a. In addition, inside the cell 200a, lowest-layer cells 100a, 100b, and 100c are connected via a bus line 202a and a communication link 203a.

Similarly, the cell 200b includes a DC/DC converter 201b and a control unit 204b. In addition, inside the cell 200b, lowest-layer cells 100d and 100e are connected via a bus line 202b and a communication link 203b.

Additionally, the cell 200c includes a DC/DC converter 201c and a control unit 204c. Inside the cell 200c, a battery 210c is connected via a communication link 203c.

Although only a DC/DC converter and a control unit are illustrated for each of the lowest-layer cells 100a, 100b, 100c, 100d, and 100e in FIG. 4, the lowest-layer cells 100a, 100b, 100c, 100d, and 100e may include an internal configuration in which various devices or elements are connected to a bus line, as illustrated in FIG. 3, for example.

To reiterate, FIG. 4 will be used to describe the supply of electric power between cells. For example, if electric power threatens to run out inside the cell 100a, the control unit 104a included in the cell 100a transmits a power supply demand to the other cells 100b and 100c as well as the control unit 204a over the communication link 203a. The control unit 104b of the other cell 100b and the control unit 104c of the other cell 100c evaluate their internal power status, determine whether or not power supply to the cell 100a is available, and reply to the control unit 104a with the availability or unavailability of power supply.

Meanwhile, the control unit 204a receives the power supply demand from the control unit 104a, and forwards the demand over the communication link 303a to the control units 204b and 204c of the other cells 200b and 200c in the same layer. Note that when the control unit 204a forwards the power supply demand to the control units 204b and 204c, the control unit 204a may forward in such a way as to hide the fact that the power supply demand was transmitted from the control unit 104a. In other words, since ultimately there is an insufficiency of electric power inside the cell 200a, only information indicating that electric power is demanded may be transmitted from the control unit 204a to the control units 204b and 204c.

The control unit 204b receives the demand forwarded from the control unit 204a, and transmits the power supply demand forwarded from the control unit 204a to the control units 104d and 104e of the cells 100d and 100e included inside the cell 200b. The control units 104d and 104e evaluate their internal power status, determine whether or not power supply to the cell 200a (or the cell 100a) is available, and reply to the control unit 204b with the availability or unavailability of power supply. If power supply is available in least one lower-layer cell, the control unit 204b replies to the control unit 204a with an indication that power supply is available, whereas if power supply is unavailable in all lower-layer cells, the control unit 204b replies to the control unit 204a with an indication that power supply is unavailable.

Meanwhile, the control unit 204c receives the demand forwarded from the control unit 204a, evaluates the power storage status of the battery 210c included inside the cell 200c, determines whether or not power supply to the cell 200a (or the cell 100a) is available, and replies to the control unit 204a with the availability or unavailability of power supply.

The control unit 204a receives the replies from the control units 204b and 204c, and if at least one reply indicates that power supply is available, the control unit 204a transmits to the control unit 104a an indication that power supply is available. On the other hand, if none of the replies indicates that power supply is available, the control unit 204a transmits to the control unit 104a an indication that power supply is unavailable.

The control unit 104a receives replies from the control units 104b, 104c, and 204a, and if a cell with available power supply exists, the control unit 104a selects the cell from which to receive a supply of electric power, and requests power supply from the control unit of that cell. For example, if there is a reply from the control unit 104b indicating that power supply is available, the control unit 104a requests power supply from the control unit 104b. Also, when the control unit 104a requests power supply from the control unit 104b, the control unit 104a also transmits an indication of accepting the proposal for power supply from the control unit 104b to the other control units 104c and 204a. The control unit 104b receives the request from the control unit 104a, and controls the DC/DC converter 101b to output electric power to the bus line 202a. Additionally, the control unit 104a controls the DC/DC converter 101a to receive the electric power being output to the bus line 202a.

By having a configuration as illustrated above and executing operation as discussed above, the power supply system 1 according to an embodiment of the present disclosure is able to achieve efficient power supply between cells while also having a simple configuration. Note that operation in the case of power supply across a higher layer in the power supply system 1 according to an embodiment of the present disclosure will be discussed in detail later.

Inside the lowest-layer cells, respective DC voltage values may be set independently. However, in some cases there may be a limit to the number of voltages that the DC/DC converter 201a is able to step down, and control is also complicated. Consequently, instead of increasing the number of lowest-layer cells without limitation, it is desirable to provide a limit on the number of lowest-layer cells included in the single cell 200a.

In addition, the control unit 204a may also store information about the number of connections in the lowest layer included in the cell 200a. By storing information about the number of connections in the lowest layer included in the cell 200a, if the number of connections in the lowest-layer cells connected to the bus line 202a has reached an upper limit from the perspective of the performance of the DC/DC converter 201a, the control unit 204a may refuse a new connection in the lowest-layer cells, or not forward a power supply demand to the higher layer even if a power supply demand is received.

The cell 200a including the multiple cells 100a, 100b, and 100c as illustrated in FIG. 4 is joined to another cell 200b including the multiple cells 100d and 100e by a bus line 302a, thereby enabling the transmission of DC power between cells over a long distance (for example, approximately several kilometers or more). For example, by raising the rated voltage of the bus line 302a and decreasing the amount of current flowing through the bus line 302a, loss during power transmission between the cells 200a and 200b over the bus line 302a may be reduced. In other words, even if a high rated voltage like that of the bus line 302a is not required inside the cell 200a grouping together the cells 100a, 100b, and 100c existing at comparatively close distances to each other (within approximately several hundred meters, for example), the exchange of DC power with reduced loss becomes possible between the cell 100a included in the cell 200a and the cell 100d included in the cell 200b, for example.

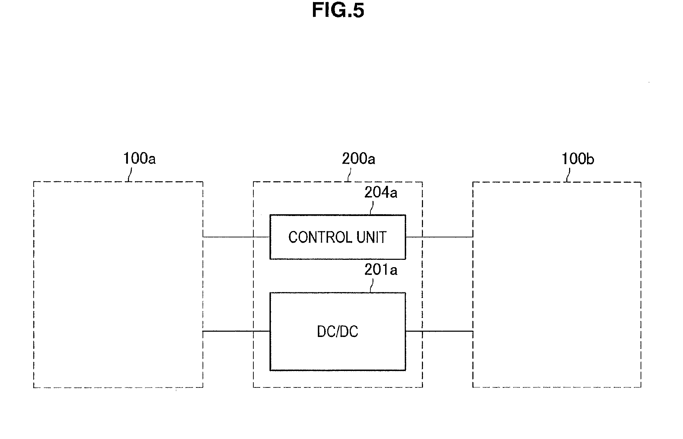

The above thus uses FIG. 4 to describe an example configuration of the power supply system 1 according to an embodiment of the present disclosure. The foregoing illustrates an example of the case in which cells exist in multiple layers, but as a simple configuration, a configuration in which two DC grids are linked by a single cell 200a, as illustrated in FIG. 5, for example, also belongs to the technical scope of the present disclosure. FIG. 5 is an explanatory diagram illustrating another example configuration of the power supply system 1 according to an embodiment of the present disclosure, and is an explanatory diagram illustrating an example of the case in which two cells 100a and 100b are linked through a cell 200a.

As illustrated in FIG. 5, by linking the two cells 100a and 100b through the cell 200a, stable power supply through the cell 200c may be realized, even if there is an extremely long distance between the cells 100a and 100b, for example.

The above thus describes an example configuration of the power supply system 1 according to an embodiment of the present disclosure. Next, an example of a functional configuration of the control unit included in each cell of the power supply system 1 according to an embodiment of the present disclosure will be described.

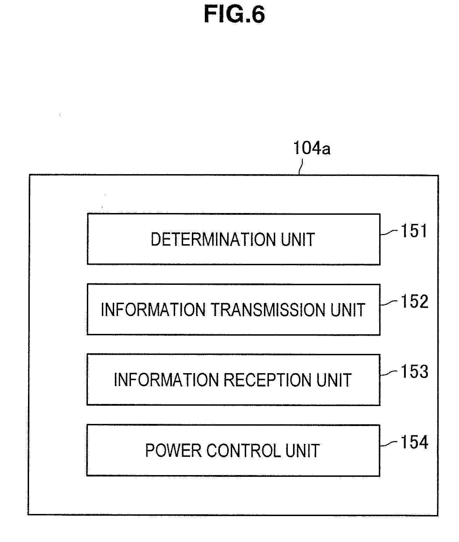

FIG. 6 is an explanatory diagram illustrating an example configuration of the control unit included in each cell of the power supply system 1 according to an embodiment of the present disclosure. At this point, an example configuration of the control unit 104a included in the cell 100a will be described. Hereinafter, FIG. 6 will be used to describe an example configuration of the control unit 104a included in the cell 100a in the power supply system 1 according to an embodiment of the present disclosure.

As illustrated in FIG. 6, the control unit 104a includes a determination unit 151, an information transmission unit 152, an information reception unit 153, and a power control unit 154.

The determination unit 151 monitors the status of electric power inside the cell 100a, and determines whether or not the electric power threatens to run out inside the cell 100a. For example, the determination unit 151 determines whether or not the electric power threatens to run out inside the cell 100a according to whether or not power supply from an electric utility has been interrupted, and the amount of stored charge in the battery 110a has fallen to or below a designated amount.

If the determination unit 151 monitors the status of electric power inside the cell 100a and determines that the electric power threatens to run out inside the cell 100a, the determination unit 151 operates to cause a power supply demand to be transmitted from the information transmission unit 152 over the communication link 203a.

Also, if a power supply demand is transmitted from another cell, the determination unit 151 determines whether or not power supply to the device that transmitted the power supply demand is available. If power supply to the device that transmitted the power supply demand is available, the determination unit 151 operates to cause a reply to be transmitted from the information transmission unit 152 to the relevant device over the communication link 203a as a power supply candidate.

The information transmission unit 152 transmits, over the communication link 203a, various information related to the transmission and reception of electric power. The information transmission unit 153 receives, over the communication link 203a, various information related to the transmission and reception of electric power.

If the determination unit 151 determines that the electric power threatens to run out inside the cell 100a, the information transmission unit 152 transmits a power demand to other cells (in the example of FIG. 3, the cells 100b, ..., 100n) over the communication link 203a. Also, in response to a consent of power supply from other cells (in the example of FIG. 3, the cells 100b, ..., 100n), the information transmission unit 152 selects a cell from which to receive a supply of electric power, and transmits an indication of selecting that cell as a power supplier to the control unit of the selected cell over the communication link 203a.

The information reception unit 153 receives a power demand transmitted in the case of another cell determining that electric power threatens to run out inside the other cell.

If a power supply demand is transmitted from another cell and the determination unit 151 determines that power supply to that cell is available, the information transmission unit 152 transmits information for replying to that device as a power supply candidate. When replying, the information transmission unit 152 may also include information such as the cost of the power supply, the time until the supply starts, the time during which supply is available, and a log of previous supply to the device that demanded the power supply, for example. By transmitting information for replying to the relevant device as a power supply candidate from the information transmission unit 152, the other cell receiving the information is able to decide a power supply candidate based on that information.

A power demand transmitted in the case of determining that the electric power threatens to run out may include information such as the amount of electric power demanded, a time slot during which the supply of electric power is demanded, information about the desired cost, and a log of previous power reception, for example. Additionally, a response to a power supply may include information such as the amount of electric power that can be supplied, the time when electric power can be transmitted, information about the cost of the electric power, and a log of previous supply to the device demanding a power supply, for example. When interchanging electric power over a bus line, by exchanging these kinds of information over a communication link, respective cells are able to decide parameters such as the supply source and supply destination of electric power, and the supply time.

Note that the information transmitted by the information transmission unit 152 and the information received by the information reception unit 153 may also be encrypted. The encryption of information may be executed by the information transmission unit 152, while the decryption of encrypted information may be executed by the information reception unit 153. For the encryption of information, an encryption scheme such as shared-key cryptography or public-key cryptography may be used, for example.

By encrypting the information transmitted by the information transmission unit 152 and the information received by the information reception unit 153, inexpediences caused by the eavesdropping of information by a malicious third party may be avoided. In addition, prior to the transmission of information from the information transmission unit 152 or the reception of information by the information reception unit 153, an authentication process may also be conducted in advance with the other party. By conducting an authentication process in advance with the other party, inexpediences caused by spoofing and the like may be avoided. Note that obviously the encryption scheme and authentication scheme are not limited to specific methods.

The power control unit 154 controls the transmission of electric power from the DC/DC converter 101a and the reception of electric power at the DC/DC converter 101a over a bus line. The control of the transmission and reception of electric power by the power control unit 154 is conducted on the basis of the information transmitted by the information transmission unit 152 and the information received by the information reception unit 153. In addition, during control of the DC/DC converter 101a, the power control unit 154 uses information about the rated voltage of the internal bus line 102a inside the cell 100a and information about the rated voltage of the external bus line 202a outside the cell 100a.

In addition, when a power supply is transmitted from another power supply device, the power control unit 154 may also determine whether or not a supply of electric power is available by using information such as the amount of electric power stored in a battery or a forecast of power consumption inside the cell 100a in the near future.

By having a configuration as illustrated in FIG 6, the control unit included in each cell becomes able to ascertain the power status inside the cell, and transmit or receive information related to power supply with other cells. Additionally, if a higher layer exists, the control unit included in each cell becomes able to transmit or receive information related to power supply with a control unit belonging to the higher layer, and cause the exchange of electric power to be executed between layers.

The above thus uses FIG. 6 to describe an example configuration of the control unit 104a included in the cell 100a in the power supply system 1 according to an embodiment of the present disclosure. Although FIG. 6 illustrates an example configuration of the control unit 104a included in the cell 100a belonging to the lowest layer, a control unit included in a cell belonging to a layer higher than the lowest layer may also have a configuration similar to the configuration illustrated in FIG. 6. However, for a cell belonging to a layer higher than the lowest layer, depending on the cell, the determination of whether or not electric power threatens to run out inside the cell may be unnecessary. For example, for the cell 200a illustrated in FIGS. 3 and 4, the determination of the possibility of electric power running out inside the cell 200a itself is not strictly necessary. In this case, the determination unit 151 illustrated in FIG. 6 may also not be included in the control unit 204a of the cell 200a.

### [1.3. Example operation of system]

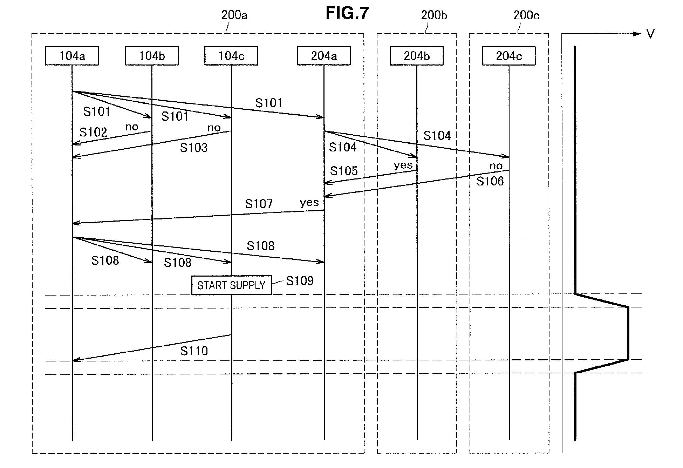

Next, example operation of the power supply system 1 according to an embodiment of the present disclosure will be described. FIG. 7 is a sequence diagram illustrating example operation of the power supply system 1 according to an embodiment of the present disclosure. Hereinafter, FIG. 7 will be used to describe example operation of the power supply system 1 according to an embodiment of the present disclosure.

The illustration in FIG. 7 is example operation for the case of the power supply system 1 according to an embodiment of the present disclosure having a configuration like in FIG. 4, in which the control unit 104a of the cell 100a transmits a power supply demand to other cells, and the cell 100a receives a power supply from another cell, for example.

If electric power threatens to run out inside the cell 100a, the control unit 104a included in the cell 100a transmits a power supply demand to the other cells 100b and 100c as well as the control unit 204a over the communication link 203a (step S101). In other words, the control unit 104a broadcasts the power supply demand to the other control units connected to the communication link 203a. The determination of whether or not the electric power threatens to run out inside the cell 100a is executed by the determination unit 151 illustrated in FIG. 6, for example, while the transmission of the power supply demand is executed by the information transmission unit 152, for example.

The control unit 104b of the cell 100b and the control unit 104c of the cell 100c each receives the power supply demand transmitted from the control unit 104a with the information reception unit 153 illustrated in FIG. 6, for example. Subsequently, the control units 104b and 104c evaluate the power status inside the cells 100b and 100c, respectively, determine whether or not power supply to the cell 100a is available, and reply to the control unit 104a with the availability or unavailability of power supply (steps S102, S103).

FIG. 7 illustrates an example in which the control unit 104b replies to the control unit 104a to indicate that power supply to the cell 100a is available, while the control unit 104c replies to the control unit 104a to indicate that power supply to the cell 100a is unavailable.

In addition, the control unit 204a of the cell 200a belonging to the higher layer above the cell 100a receives the power supply demand transmitted from the control unit 104a, and transmits a power supply demand to the control units 204b and 204c of the other cells 200b and 200c in the same layer (step S104). As discussed earlier, when the control unit 204a transmits the power supply demand to the control units 204b and 204c, the control unit 204a may forward in such a way as to hide the fact that the power supply demand was transmitted from the control unit 104a. In other words, since ultimately there is an insufficiency of electric power inside the cell 200a, only information indicating that electric power is demanded may be transmitted from the control unit 204a to the control units 204b and 204c.

The control units 204b and 200c receive the demand forwarded from the control unit 204a, and transmit the power supply demand forwarded from the control unit 204a to control units (for example, control units 104d and 104e) of cells (for example, cells 100d and 100e) included inside the cells 200b and 200c, respectively. The control units 104d and 104e evaluate their internal power status, determine whether or not power supply to the cell 200a (or the cell 100a) is available, and reply to the control unit 204b with the availability or unavailability of power supply.

The control units 204b and 204c receive replies from cells in the lower layer, and transmit a response to the control unit 204a (steps S105, S106). For example, if power supply is available in least one lower-layer cell, the control unit 204b replies to the control unit 204a with an indication that power supply is available, whereas if power supply is unavailable in all lower-layer cells, the control unit 204b replies to the control unit 204a with an indication that power supply is unavailable.

FIG. 7 illustrates an example in which the control unit 204b replies to the control unit 204a to indicate that power supply to the cell 200a is available, while the control unit 204c replies to the control unit 204a to indicate that power supply to the cell 200a is unavailable.

The control unit 204a receives the replies from the control units 204b and 204c, and on the basis of the replies from the control units 204b and 204c, transmits a response to the power supply demand to the control unit 104a (step S107). If at least one reply indicates that power supply is available, the control unit 204a transmits to the control unit 104a an indication that power supply is available. On the other hand, if none of the replies indicates that power supply is available, the control unit 204a transmits to the control unit 104a an indication that power supply is unavailable. In the example illustrated in FIG. 7, the control unit 204b replies to the control unit 204a to indicate that power supply to the cell 200a is available, and thus the control unit 204a transmits to the control unit 104a an indication that power supply is available.

The control unit 104a receives the replies from the control units 104b, 104c, and 204a, and on the basis of the replies, selects a cell from which to request a power supply, and transmits the selection result to the other cells 100b and 100c as well as the control unit 204a (step S108). In other words, the control unit 104a broadcasts the selection result to the other control units connected to the communication link 203a. In the example illustrated in FIG. 7, the control unit 104a transmits an indication of accepting the proposal for power supply from the cell 100c.

By receiving the selection result transmitted from the control unit 104a, the control unit 104c learns that the cell 100c has been selected as the power supply source, and thus the control unit 104c controls the DC/DC converter 101c to start a power supply from the cell 100c to the cell 100a over the bus line 202a (step S109).

When starting the power supply directed towards the cell 100a, the cell 100c determines whether or not another cell connected to the bus line 202a is supplying power over the bus line 202a. If another cell is not supplying power over the bus line 202a, the cell 100c may notify the other cells connected to the bus line 202a that the cell 100c has taken control of the bus line 202a. By determining whether or not the bus line is being controlled, each cell becomes able to perform control to not apply a voltage exceeding the rating to the bus line.

In FIG. 7, the change in the voltage value of the bus line 202a is illustrated on the right edge. In step S109, when the control unit 104c controls the DC/DC converter 101c to start a power supply from the cell 100c to the cell 100a over the bus line 202a, the voltage of the bus line 202a rises to the rated voltage of the bus line 202a, for example.

The time of the power supply from the cell 100c to the cell 100a may be set on the basis of a supply time included in the power supply demand transmitted by the control unit 104a in the above step S101, for example. After a designated time elapses, the control unit 104c transmits to the control unit 104a an indication of stopping the power supply from the cell 100c (step S110).

In step S110, after the control unit 104c transmits to the control unit 104a an indication of stopping the power supply from the cell 100c, the voltage of the bus line 202a gradually falls as illustrated in FIG. 7.

By having the control unit included in each cell execute operations like the above, the power supply system 1 according to an embodiment of the present disclosure becomes able to exchange DC power between cells within the same layer.

The example operation illustrated in FIG. 7 is the case in which the control unit 104a transmits a power supply demand, and electric power is supplied within the same layer from the cell 100c included in the cell 200a. However, cases in which the control unit 104 transmits a power supply demand, but all of the cells included in the cell 200a within the same layer are unable to supply electric power, obviously are also conceivable. In such a case, by having the cell 200a transmit a power supply demand to other cells belonging to the same layer as the cell 200a, and receiving electric power from another cell belonging to the same layer, electric power is supplied to the cell 100a in response to the power supply demand from the control unit 104a.

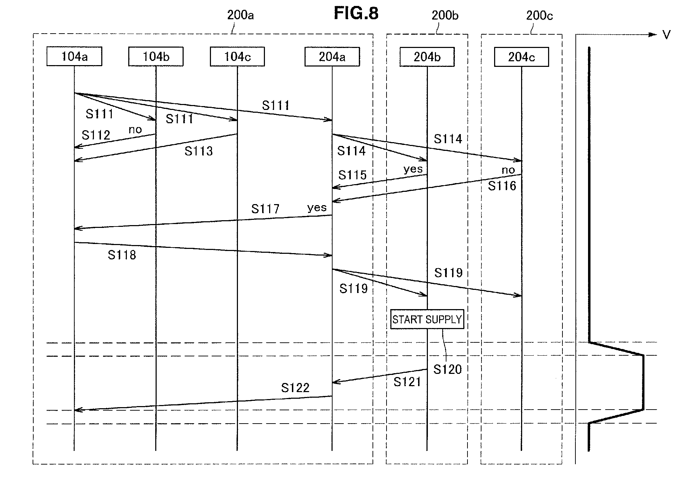

FIG. 8 is a sequence diagram illustrating example operation of the power supply system 1 according to an embodiment of the present disclosure. Hereinafter, FIG. 8 will be used to describe example operation of the power supply system 1 according to an embodiment of the present disclosure.

The illustration in FIG. 8 is similar to the example operation illustrated in FIG. 7, and is example operation for the case of the power supply system 1 according to an embodiment of the present disclosure having a configuration like in FIG. 4, in which the control unit 104a of the cell 100a transmits a power supply demand to other cells, and the cell 100a receives a power supply from another cell, for example.

If electric power threatens to run out inside the cell 100a, the control unit 104a included in the cell 100a transmits a power supply demand to the other cells 100b and 100c as well as the control unit 204a over the communication link 203a (step S111). In other words, the control unit 104a broadcasts the power supply demand to the other control units connected to the communication link 203a.

The control unit 104b of the cell 100b and the control unit 104c of the cell 100c each receives the power supply demand transmitted from the control unit 104a with the information reception unit 153 illustrated in FIG. 6, for example. Subsequently, the control units 104b and 104c evaluate the power status inside the cells 100b and 100c, respectively, determine whether or not power supply to the cell 100a is available, and reply to the control unit 104a with the availability or unavailability of power supply (steps S112, S113). FIG. 8 illustrates an example in which the control units 104b and 104c both reply to the control unit 104a to indicate that power supply to the cell 100a is unavailable.

In addition, the control unit 204a of the cell 200a belonging to the higher layer above the cell 100a receives the power supply demand transmitted from the control unit 104a, and transmits a power supply demand to the control units 204b and 204c of the other cells 200b and 200c in the same layer (step S 114). As discussed earlier, when the control unit 204a transmits the power supply demand to the control units 204b and 204c, the control unit 204a may forward in such a way as to hide the fact that the power supply demand was transmitted from the control unit 104a. In other words, since ultimately there is an insufficiency of electric power inside the cell 200a, only information indicating that electric power is demanded may be transmitted from the control unit 204a to the control units 204b and 204c.

The control units 204b and 200c receive the demand forwarded from the control unit 204a, and transmit the power supply demand forwarded from the control unit 204a to control units (for example, control units 104d and 104e) of cells (for example, cells 100d and 100e) included inside the cells 200b and 200c, respectively. The control units 104d and 104e evaluate their internal power status, determine whether or not power supply to the cell 200a (or the cell 100a) is available, and reply to the control unit 204b with the availability or unavailability of power supply. FIG. 7 illustrates an example in which the control unit 204b replies to the control unit 204a to indicate that power supply to the cell 200a is available, while the control unit 204c replies to the control unit 204a to indicate that power supply to the cell 200a is unavailable.

The control unit 204a receives the replies from the control units 204b and 204c, and on the basis of the replies from the control units 204b and 204c, transmits a response to the power supply demand to the control unit 104a (step S 117). If at least one reply indicates that power supply is available, the control unit 204a transmits to the control unit 104a an indication that power supply is available. On the other hand, if none of the replies indicates that power supply is available, the control unit 204a transmits to the control unit 104a an indication that power supply is unavailable. In the example illustrated in FIG. 8, the control unit 204b replies to the control unit 204a to indicate that power supply to the cell 200a is available, and thus the control unit 204a transmits to the control unit 104a an indication that power supply is available.

The control unit 104a receives the replies from the control units 104b, 104c, and 204a, and on the basis of the replies, selects a cell from which to request a power supply, and transmits the selection result to the other cells 100b and 100c as well as the control unit 204a (step S118). In other words, the control unit 104a broadcasts the selection result to the other control units connected to the communication link 203a. In the example illustrated in FIG. 8, the control unit 104a transmits an indication of accepting the proposal for power supply from the control unit 204a.

By receiving the selection result transmitted from the control unit 104a, the control unit 204a learns that the DC/DC converter 201a has been selected as the power supply source. However, for the DC/DC converter 201a to supply electric power to the cell 100a, it is necessary to have electric power be output to the bus line 302a from the cell 200b including the control unit 204b that responded to indicate that power supply is available in the above step S 115. Consequently, after receiving the selection result transmitted from the control unit 104a, the control unit 204a broadcasts the selection result to the control units 204b and 200c (step S 119). In the example illustrated in FIG. 8, the control unit 204a transmits an indication of accepting the proposal for power supply from the control unit 204b.

By receiving the selection result transmitted from the control unit 204a, the control unit 204b learns that the cell 200b has been selected as the power supply source, and thus the control unit 204b controls the DC/DC converter 201b to start a power supply from the cell 200b to the cell 200a over the bus line 302a (step S210).

In FIG. 8, the change in the voltage values of the bus line 202a and the bus line 302a is illustrated on the right edge. In step S210, when the control unit 204b controls the DC/DC converter 201b to start a power supply from the cell 200b to the cell 200a over the bus line 302a, the voltage of the bus line 302a rises to the rated voltage of the bus line 302a, for example. The DC/DC converter 201a steps down the voltage of the electric power supplied to the bus line 302a to the rated voltage of the bus line 202a, and thereby supplies the electric power supplied from the cell 200b to the bus line 202a of the cell 200a. Additionally, the DC/DC converter 101a of the cell 100a receives the electric power supplied to the bus line 202a, and steps down the voltage to the rated voltage of the bus line 102a of the cell 100a.

The time of the power supply from the cell 200b to the cell 200a may be set on the basis of a supply time included in the power supply demand transmitted by the control unit 104a in the above step S111, for example. After a designated time elapses, the control unit 204b transmits to the control unit 204a an indication of stopping the power supply from the cell 200b (step S121). Subsequently, the control unit 204a receives the indication of stopping the power supply from the cell 200b from the control unit 204b, and transmits an indication of stopping the power supply from the cell 200b to the control unit 104a of the cell 100a receiving the electric power (step S122).

By having the control unit included in each cell execute operations like the above, the power supply system 1 according to an embodiment of the present disclosure becomes able to exchange DC power between cells across layers.

### <2. Conclusion>

In the power supply system 1 according to an embodiment of the present disclosure, when present disclosure is required inside a cell, such as when electric power is expected to run out inside the cell, for example, a power supply demand is transmitted from that cell. The power supply demand from the cell is transmitted to cells within the same layer and to cells in a higher layer. Subsequently, a cell having an available power supply responds with an indication that power supply is available to the cell that transmitted the power supply demand, and supplies the demanded electric power to the cell that transmitted the power supply demand.

As described above, according to an embodiment of the present disclosure, by having a hierarchical structure, a power supply system enabling power supply within the same layer and power supply across layers is provided, and a control unit that controls power supply in the power supply system 1 is provided. The power supply system 1 according to an embodiment of the present disclosure may be realized with a simple configuration, and also enables scalable construction of the system.

Also, the power supply system 1 according to an embodiment of the present disclosure obviously is also capable of coexisting with an existing power grid that supplies AC power. The bus lines that supply DC power are provided independently from the existing power grid, and furthermore, by using the power supply system 1 according to an embodiment of the present disclosure, reducing dependency on the existing power grid becomes possible. Furthermore, since the power supply system 1 according to an embodiment of the present disclosure is provided independently from an existing power grid, usage in regions where an existing power grid does not exist obviously is also possible.

Steps in processes executed by devices in this specification are not necessarily executed chronologically in the order described in a sequence chart or a flow chart. For example, steps in processes executed by devices may be executed in a different order from the order described in a flow chart or may be executed in parallel.

Further, a computer program can be created which causes hardware such as a CPU, ROM, or RAM, incorporated in each of the devices, to function in a manner similar to that of structures in the above-described devices. Furthermore, it is possible to provide a recording medium having the computer program recorded thereon. Moreover, the hardware configuration of each function block shown in functional block diagrams allows a series of processes to be implemented in hardware.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, the communication link may be wired or wireless. For example, the communication link may be formed by a so-called mesh network. Also, although the present embodiment indicates the case of the communication link and the bus line being separate, the present disclosure is not limited to such an example. For example, information related to the transmission and reception of DC power may also be imposed onto the bus line. By imposing information related to the transmission and reception of electric power onto the bus line, the communication link may be omitted from the power supply system.

In addition, the effects described in the present specification are merely illustrative and demonstrative, and not limitative. In other words, the technology according to the present disclosure can exhibit other effects that are evident to those skilled in the art along with or instead of the effects based on the present specification.

Additionally, the present technology may also be configured as below.
(1) A power control device including:
   a reception unit configured to receive a power supply demand from a cell connected to a first bus line that transmits direct-current (DC) power;
   a transmission unit configured to transmit, in response to the power supply demand from the cell connected to the first bus line that was received by the reception unit, the power supply demand to a cell connected to a second bus line that transmits DC power; and
   a power control unit configured to control, by a reply to the power supply demand transmitted to the cell connected to the second bus line, power conversion between the first bus line and the second bus line on a basis of information relating to respective voltages of the first bus line and the second bus line.
(2) The power control device according to (1), wherein
   the power control unit controls the power conversion between the first bus line and the second bus line on a basis of information about a number of the cell connected to the first bus line.
(3) The power control device according to (1) or (2), wherein
   the power control unit controls the power conversion between the first bus line and the second bus line on a basis of information about the cell connected to the second bus line.
(4) The power control device according to any of (1) to (3), wherein
   the power control unit causes the transmission unit to transmit the power supply demand to the cell connected to the second bus line by treating the power supply demand from the cell connected to the first bus line that was received by the reception unit as a power supply demand of the power control device itself.
(5) The power control device according to any of (1) to (4), wherein
   after a response to the power supply demand transmitted to the cell connected to the second bus line is received from the cell, the power control unit causes the transmission unit to transmit the response to the cell connected to the first bus line that transmitted the power supply demand.
(6) The power control device according to any of (1) to (5), wherein
   a rated voltage of the first bus line is lower than a rated voltage of the second bus line.
(7) The power control device according to any of (1) to (5), wherein
   a rated voltage of the first bus line is higher than a rated voltage of the second bus line.
(8) A power control method including:
   receiving a power supply demand from a cell connected to a first bus line that transmits direct-current (DC) power;
   transmitting, in response to the received power supply demand from the cell connected to the first bus line, the power supply demand to a cell connected to a second bus line that transmits DC power; and
   controlling, by a reply to the power supply demand transmitted to the cell connected to the second bus line, power conversion between the first bus line and the second bus line on a basis of information relating to respective voltages of the first bus line and the second bus line.

### Reference Signs List

- 1: power supply system
- 100a: cell
- 101a: DC/DC converter
- 102a: bus line
- 103a: communication link
- 104a: control unit

## Claims

1. A power control device comprising:
a reception unit configured to receive a power supply demand from a cell connected to a first bus line that transmits direct-current (DC) power;
a transmission unit configured to transmit, in response to the power supply demand from the cell connected to the first bus line that was received by the reception unit, the power supply demand to a cell connected to a second bus line that transmits DC power; and
a power control unit configured to control, by a reply to the power supply demand transmitted to the cell connected to the second bus line, power conversion between the first bus line and the second bus line on a basis of information relating to respective voltages of the first bus line and the second bus line.

2. The power control device according to claim 1, wherein
the power control unit controls the power conversion between the first bus line and the second bus line on a basis of information about a number of the cell connected to the first bus line.

3. The power control device according to claim 1, wherein
the power control unit controls the power conversion between the first bus line and the second bus line on a basis of information about the cell connected to the second bus line.

4. The power control device according to claim 1, wherein
the power control unit causes the transmission unit to transmit the power supply demand to the cell connected to the second bus line by treating the power supply demand from the cell connected to the first bus line that was received by the reception unit as a power supply demand of the power control device itself.

5. The power control device according to claim 1, wherein
after a response to the power supply demand transmitted to the cell connected to the second bus line is received from the cell, the power control unit causes the transmission unit to transmit the response to the cell connected to the first bus line that transmitted the power supply demand.

6. The power control device according to claim 1, wherein
a rated voltage of the first bus line is lower than a rated voltage of the second bus line.

7. The power control device according to claim 1, wherein
a rated voltage of the first bus line is higher than a rated voltage of the second bus line.

8. A power control method comprising:
receiving a power supply demand from a cell connected to a first bus line that transmits direct-current (DC) power;
transmitting, in response to the received power supply demand from the cell connected to the first bus line, the power supply demand to a cell connected to a second bus line that transmits DC power; and
controlling, by a reply to the power supply demand transmitted to the cell connected to the second bus line, power conversion between the first bus line and the second bus line on a basis of information relating to respective voltages of the first bus line and the second bus line.
